# EUROPEAN PATENT APPLICATION

(11) **EP 2 518 667 A1**
(43) Date of publication of application: **31.10.2012**
(21) Application number: 12165203.6
(22) Date of filing: 23.04.2012
(51) Int. Cl.: G06Q 10/06, G06Q 10/00

(54) **Apparatus and method for estimating developing speed of technology**

(30) Priority: 22.04.2011 KR 20110037799
(71) Applicant: Korea Institute Of Science and Technology Information, Daejeon 305-806 (KR)
(72) Inventor: Jung, Han Min, 305-333 Daejeon (KR); Sung, Won Kyung, 305-390 Daejeon (KR); Kim, Pyung, 305-150 Daejeon (KR); Lee, Mi Kyung, 305-727 Daejeon (KR); Lee, Seung Woo, 305-333 Daejeon (KR); Seo, Dong Min, 302-282 Daejeon (KR)
(74) Representative: Collin, Jérôme

(57) **Abstract**

The present invention relates to an apparatus and method for estimating a developing speed of a technology, and the developing speed estimation apparatus includes: a bibliographic database for integrating heterogeneous resources; a feature set creation module for calculating feature values of predefined features by searching the bibliographic database, and creating a feature set of each technology using the calculated feature values, for technologies positioned on a technology lifecycle; an answer feature set creation module for calculating common feature values of feature sets of technologies belonging to the same stage in the technology lifecycle and creating an answer feature set of each stage; a year-specific stage determination module for, if a specific technology is inputted, acquiring feature-related information for predetermined features by searching the bibliographic database for the specific technology, creating a year-specific feature set using the acquired feature-related information, and determining a year-specific stage of the specific technology by comparing the year-specific feature set with the answer feature set; and a developing speed estimation module for estimating the developing speed of the specific technology using the determined year-specific stage.

Therefore, according to the present invention, although a specific technology does not exist in a technology lifecycle, a stage where the specific technology lifecycle belongs to in a technology lifecycle and how fast the technology advances can be determined using various kinds of bibliographic databases.

## Description

### BACKGROUND OF THE INVENTION

### Field of the Invention

The present invention relates to an apparatus and method for estimating a developing speed of a technology, and more specifically, to an apparatus and method for estimating a developing speed of a technology, in which a feature set is created for each technology position on a technology lifecycle, and an answer feature set is created for each stage of the technology lifecycle. If a specific technology is inputted, feature-related information is acquired for predetermined features by searching a bibliographic database for the specific technology, and a year-specific feature set is created using the acquired feature-related information. Then, a year-specific stage of the specific technology is determined by comparing the year-specific feature set with the answer feature set, and the developing speed of the specific technology is estimated using the determined year-specific stage.

### Background of the Related Art

The world is moving to a knowledge-based industrial society in which knowledge and information dominate competitiveness of a country, and particularly, competitiveness in science and technologies of a country is recognized as a foundation of competitiveness of the country.

Therefore, many countries in the world are trying to draw and select core technologies and research subjects in advance and concentrate on research and development of the technologies so as to survive future competitions.

In this reason, the countries find out research themes that will lead future science and technologies of the countries and provide a technology lifecycle thereof.

However, conventionally, if a specific technology does not exist in the technology lifecycle, it is difficult to figure out a stage where the specific technology belongs to in the technology lifecycle and how fast the technology advances.

### SUMMARY OF THE INVENTION

Accordingly, the present invention has been made in view of the above-mentioned problems occurring in the prior art, and it is an object of the present invention to provide an apparatus and method for estimating a developing speed of a technology, in which although a specific technology does not exist in a technology lifecycle, a stage where the specific technology lifecycle belongs to in a technology lifecycle and how fast the technology advances can be determined using various kinds of bibliographic databases.

To accomplish the above object, according to an aspect of the present invention, there is provided an apparatus for estimating a developing speed of a technology, the apparatus including a storage and a processor and comprising: a bibliographic database for integrating heterogeneous resources; a feature set creation module for calculating feature values of predefined features by searching the bibliographic database, and creating a feature set of each promising technology using the calculated feature values, for promising technologies positioned on a promising technology lifecycle; an answer feature set creation module for calculating common feature values of feature sets of promising technologies belonging to the same stage in the promising technology lifecycle and creating an answer feature set of each stage; a year-specific stage determination module for, if a specific technology is inputted, acquiring feature-related information for predetermined features by searching the bibliographic database for the specific technology, creating a year-specific feature set using the acquired feature-related information, and determining a year-specific stage of the specific technology by comparing the year-specific feature set with the answer feature set; and a developing speed estimation module for estimating the developing speed of the specific technology using the determined year-specific stage.

The apparatus for estimating a developing speed of a technology further comprises: a visualization module for visualizing the promising technology lifecycle which shows a current stage, the year-specific stage and an estimated stage of the specific technology.

The bibliographic database integrates at least one of resources such as papers, patents, reports, academic data, newspapers, and standards, and each of the resources can be categorized by the year.

The predefined feature includes at least one of the number of respective resources, ratios among the resources, the number of fields where a corresponding technology is found in each resource, the number of lower technology names, the number of researchers, an index of national competitiveness/growth potential, update records, record of final disposition, a period, a technical field classification table, the number of journals, the number of proceedings, a name of an author, a belonging organization, a name of a journal, an absolute growth rate of each resource, a relative growth rate of each resource, a growth rate with respect to the compound annual growth rate of each resource, a ratio of author to inventor among resources, an increase rate in the field of paper subjects, an increase rate of journals containing papers, authority of a journal containing a paper, growth potential of a country leading technology of each resource, a ratio of patent registration to patent application, and a patent family ratio.

The feature set creation module includes: a feature-related information acquisition unit for acquiring feature-related information for calculating feature values of features contained in a predefined feature set by searching the bibliographic database for the promising technologies; a feature value calculation unit for calculating a feature value for each feature using the acquired feature-related information; and a feature set creation unit for creating a feature set containing the calculated feature values for each promising technology.

The answer feature set creation module calculates a common feature value for discriminating feature values of promising technologies belonging to the same stage in the promising technology lifecycle from feature values of the other stages, and creates an answer feature set of each stage based on the common feature value.

The common feature value is at least one of an average, a range defined by minimum and maximum values, a standard deviation, and comparison between years.

The year-specific stage determination module includes: a feature-related information acquisition unit for, if the specific technology is inputted, acquiring feature-related information for calculating feature values of features contained in a predefined feature set by searching the bibliographic database; a year-specific feature value calculation unit for classifying the acquired feature-related information by the year and calculating a feature value for each feature by the year using the year-specific feature-related information; a year-specific feature set creation unit for creating a year-specific feature set for the specific technology using the year-specific feature values; and a year-specific stage determination unit for determining a year-specific stage of the specific technology by comparing the created year-specific feature set with the answer feature set.

The year-specific stage determination unit calculates a similarity to the answer feature set of each stage by applying a weighting factor to each feature value contained in the year-specific feature set and determines a stage of an answer feature set having the highest similarity as a year-specific stage of the specific technology, and the weighting factor may be a weighting factor indicated in the answer feature set of each stage.

The developing speed estimation module estimates a stage where the next stage of the specific technology will belong to in the promising technology lifecycle or a time required to move to the next stage.

To accomplish the above object, according to another aspect of the present invention, there is provided a computer-implemented method of estimating a developing speed of a technology, the method comprising the steps of: (a) creating a feature set for each promising technology positioned on a promising technology lifecycle; (b) calculating common feature values of feature sets of promising technologies belonging to the same stage in the promising technology lifecycle and creating an answer feature set of each stage; (c) if a specific technology is inputted, acquiring feature-related information for predetermined features by searching the bibliographic database for a specific technology, creating a year-specific feature set using the acquired feature-related information, and determining a year-specific stage of the specific technology by comparing the year-specific feature set with the answer feature set; and (d) estimating the developing speed of the specific technology using the determined year-specific stage.

The computer-implemented method of estimating a developing speed of a technology may further comprise the step of: visualizing the promising technology lifecycle which shows a current stage, the year-specific stage and an estimated stage of the specific technology.

Step (a) includes the steps of: acquiring feature-related information for calculating feature values of features contained in a predefined feature set by searching the bibliographic database for the promising technologies; calculating a feature value for each feature by promising technology using the acquired feature-related information; and creating a feature set containing the calculated feature values for each promising technology.

Step (b) calculates a common feature value for discriminating feature values of promising technologies belonging to the same stage in the promising technology lifecycle from feature values of the other stages, and creates an answer feature set of each stage based on the common feature value.

The common feature value is at least one of an average, a range defined by minimum and maximum values, a standard deviation, and comparison between years.

Step (c) includes the steps of: if the specific technology is inputted, acquiring feature-related information for calculating feature values of features contained in a predefined feature set by searching the bibliographic database; classifying the acquired feature-related information by the year and calculating a feature value for each feature by the year using the year-specific feature-related information; creating a year-specific feature set for the specific technology using the year-specific feature values; and determining a year-specific stage of the specific technology by comparing the created year-specific feature set with the answer feature set.

The step of determining a year-specific stage of the specific technology calculates a similarity to the answer feature set of each stage by applying a weighting factor to each feature value contained in the year-specific feature set and determines a stage of an answer feature set having the highest similarity as a year-specific stage of the specific technology, and the weighting factor may be a weighting factor indicated in the answer feature set of each stage.

In step (d), the developing speed estimation module estimates a stage where the next stage of the specific technology will belong to in the promising technology lifecycle or a time required to move to the next stage.

As described above, according to the present invention, although a specific technology does not exist in a technology lifecycle, a stage where the specific technology lifecycle belongs to in a technology lifecycle and how fast the technology advances can be determined using various kinds of bibliographic databases, and thus it is possible to find and propose technologies capable of being correctly described from the viewpoint of a system, compared with technologies derived on an ad hoc basis through the Delphi technique by existing specialists.

### BRIEF DESCRIPTION OF THE DRAWINGS

FIG. 1 is a view showing a system for estimating a developing speed of a technology according to the present invention.

FIG. 2 is a block diagram schematically showing the configuration of a developing speed estimation apparatus according to the present invention.

FIG. 3 is a block diagram specifically showing the configuration of a feature set creation module of FIG. 2.

FIG. 4 is a block diagram specifically showing the configuration of a year-specific stage determination module of FIG. 2.

FIG. 5 is a flowchart illustrating a computer-implemented method of estimating a developing speed of a technology by a developing speed estimation apparatus according to the present invention.

FIG. 6 is a flowchart illustrating a method of creating a feature set for each technology by a developing speed estimation apparatus according to the present invention.

FIG. 7 is a flowchart illustrating a method of determining a year-specific stage of a specific technology by a developing speed estimation apparatus according to the present invention.

FIG. 8 is a view showing an example of a technology lifecycle which shows development stages of a specific technology according to the present invention.

### DESCRIPTION OF SYMBOLS

100: Apparatus for estimating developing speed of technology
110: Bibliographic database
120: Interface module
130: Feature set creation module
132, 152: Feature-related information acquisition unit
134: Feature value calculation unit
136: Feature set creation unit
140: Answer feature set creation module
150: Year-specific stage determination module
154: Year-specific feature value calculation unit
156: Year-specific feature set creation unit
158: Year-specific stage determination unit
160: Developing speed estimation module
170: Visualization module

### DETAILED DESCRIPTION OF THE PREFERRED EMBODIMENT

Details of the objects, technical configurations, and operational effects of the present invention described above will be further clearly understood hereinafter according to the detailed descriptions with reference to the drawings accompanied in the specification of the present invention.

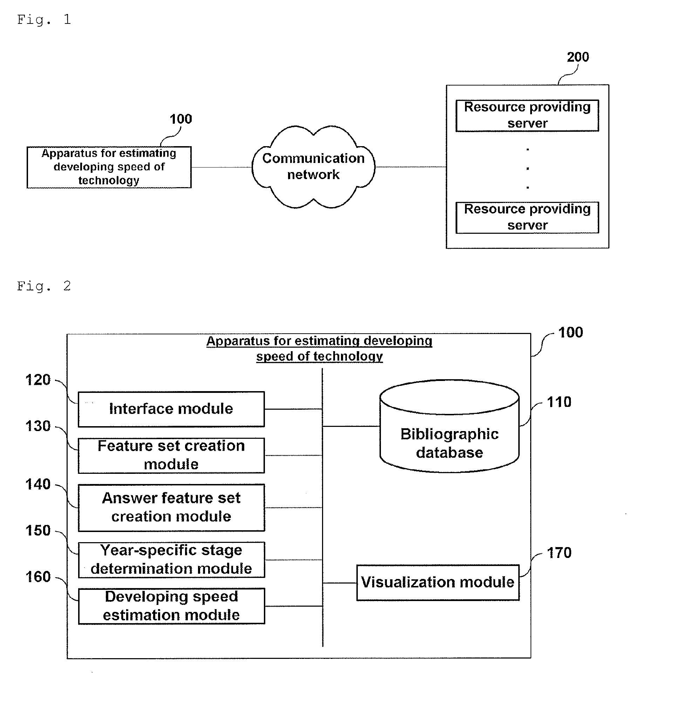

FIG. 1 is a view showing a system for estimating a developing speed of a technology according to the present invention.

Referring to FIG. 1, the system for estimating a developing speed of a technology includes a developing speed estimation apparatus 100 for collecting and integrating resources from a plurality of resource providing servers 200a, 200b, ..., 200n (hereinafter, referred to as 200) and estimating a developing speed of a specific technology using the integrated resources.

The resource providing server 200 is a server which provides papers, patents, reports, academic data, newspapers, standards and the like.

The developing speed estimation apparatus 100 creates a feature set for each technology positioned on a technology lifecycle and an answer feature set of each stage.

In addition, if a specific technology is inputted, the developing speed estimation apparatus 100 creates a year-specific feature set for the specific technology, determines a year-specific stage of the specific technology by comparing the year-specific feature set with the answer feature set, and estimates the developing speed of the specific technology.

The developing speed estimation apparatus 100 operating as described above will be described with reference to FIG. 2.

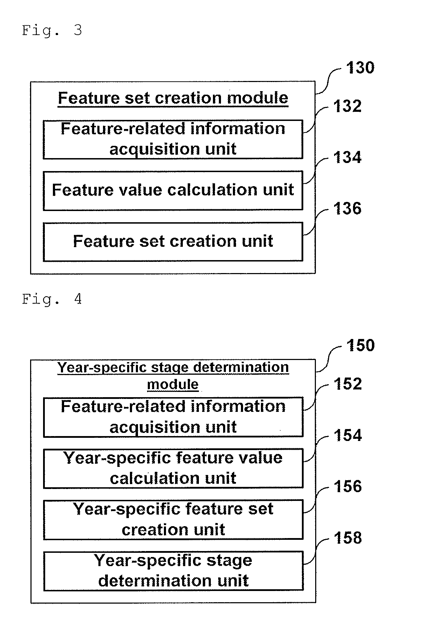

FIG. 2 is a block diagram schematically showing the configuration of a developing speed estimation apparatus according to the present invention, FIG. 3 is a block diagram specifically showing the configuration of a feature set creation module of FIG. 2, and FIG. 4 is a block diagram specifically showing the configuration of a year-specific stage determination module of FIG. 2.

Hereinafter, the apparatus for estimating a developing speed of a technology will be referred to as a developing speed estimation apparatus in describing the present invention.

Referring to FIG. 2, the developing speed estimation apparatus 100 includes a bibliographic database 110, an interface module 120, a feature set creation module 130, an answer feature set creation module 140, a year-specific stage determination module 150, a developing speed estimation module 160, and a visualization module 170.

The bibliographic database 110 integrates at least one of resources such as papers, patents, reports, academic data, newspapers, and standards.

Each of the resources stored in the bibliographic database 110 can be categorized by the year, and thus a year-specific feature set can be created later.

The interface module 120 performs interfaces with a user and receives a specific technology from the user. For example, the interface module 120 is an interface module or a key input unit connected to a user terminal through a communication network.

The feature set creation module 130 calculates feature values of predefined features by searching the bibliographic database 110 for technologies positioned on the technology lifecycle and creates a feature set for each of the technologies using the calculated feature values.

The technology lifecycle may be a graph where stages of various technologies are displayed.

Referring to FIG. 3 for the feature set creation module 130, the feature set creation module 130 includes a feature-related information acquisition unit 132, a feature value calculation unit 134 and a feature set creation unit 136.

The feature-related information acquisition unit 132 acquires feature-related information for calculating feature values of features contained in a predefined feature set by searching the bibliographic database 110 for the technologies. Here, the features contained in the feature set are previously defined as the number of papers, the number of patents, a grade of a country, ratios among resources, the number of fields where a corresponding technology is found in each resource, the number of lower technology names, the number of researchers, a technical field classification table, the number of journals, the number of proceedings, a name of an author, a name of a journal, an absolute growth rate of papers or patents for each resource, a growth rate with respect to the compound annual growth rate of each resource, an increase rate in the field of paper subjects, an increase rate of journals containing papers, a ratio of patent registration to patent application and the like.

The feature-related information is base information for obtaining the features described above, such as papers, patents and the like related to a corresponding technology.

The feature value calculation unit 134 calculates a feature value for each feature by the technology using the acquired feature-related information.

For example, if the feature-related information is papers and patents, the feature value calculation unit calculates feature values of the number of papers, the number of patents, a grade of a country, a ratio of papers to patents, the number of fields where a corresponding technology is found in the paper, the number of lower technology names, the number of researchers and the like, using the acquired papers and patents.

The feature set creation unit 136 creates a feature set containing the calculated feature values for each technology. That is, the feature set creation unit 136 creates a feature set shown in Table 1 by the technology.

**[Table 1]**

| ID | Descriptions | Value | Unit |
|---|---|---|---|
| 1 | Ratio of papers to patents | 130 | % |
| 2 | The number of papers | 17 | piece |
| 3 | The number of fields where a corresponding technology is found in a paper | 4 | piece |
| 4 | The number of lower technology names | 8 | piece |
| 5 | . . . | | |

Referring to Table 1, the feature set contains features and feature values corresponding to the features, and the feature values are expressed in a unit such as %, the number of pieces, the number of cases or the like.

The features contained in the feature set are predefined elements.

The answer feature set creation module 140 calculates common feature values of feature sets of technologies belonging to the same stage in the technology lifecycle and creates an answer feature set of each stage.

That is, the answer feature set creation module 140 calculates common feature values for discriminating feature values of the technologies belonging to the same stage in the technology lifecycle from feature values of the other stages, and creates an answer feature set of each stage based on the common feature values.

Here, the common feature value is an average, a range defined by minimum and maximum values, a standard deviation, comparison between years or the like. Here, the comparison between years is comparing feature values between the years of reference year-1 (B), reference year-2 (C) and reference year-3 (D), in which the current year is determined as a reference year (A). That is, the comparison between years may have a syntax of comparing feature values between the years, such as A>B, B>A, or B>C.

The answer feature set created by the answer feature set creation module 140 is as shown in Table 2.

**[Table 2]**

| | 'Technology Trigger' stage | | | |
|---|---|---|---|---|
| ID | Descriptions | Value | Unit | Weighting factor |
| 1 | Ratio of papers to patents | 100∼300 | % | 0.2 |
| 2 | The number of papers | 1∼5 | piece | 0.3 |
| 3 | The number of fields where a corresponding technology is found in a paper | 1∼2 | piece | 0.15 |
| 4 | The number of lower technology names | Less than five | piece | 0.1 |
| 5 | . . . | | | |

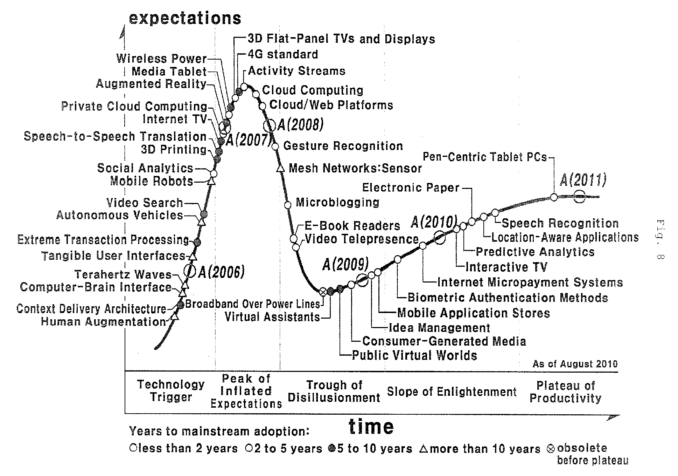

Table 2 shows an answer feature set corresponding to the "Technology Trigger" stage in the technology lifecycle shown in FIG. 8.

A common feature value, a unit of the feature value and a weighting factor are set in the answer feature set. The weighting factor is used to calculate a similarity for determining a stage where a feature set of a specific technology belongs to.

In some of the technologies, feature values of a specific stage may be overlapped with feature values of the other stages. Therefore, the answer feature set creation module 140 calculates common feature values for discriminating feature values of each stage and creates an answer feature set of each stage, in a method of excluding such cases as collisions occur among the stages by removing feature values overlapped among different stages and removing extreme feature values in each stage.

If a specific technology is inputted through the interface module 120, the year-specific stage determination module 150 acquires feature-related information for predefined features by searching the bibliographic database 110 for the specific technology, creates a year-specific feature set using the acquired feature-related information, and determines a year-specific stage of the specific technology by comparing the year-specific feature set with the answer feature set.

Referring to FIG. 4 for the year-specific stage determination module 150, the year-specific stage determination module 150 includes a feature-related information acquisition unit 152, a year-specific feature value calculation unit 154, a year-specific feature set creation unit 156 and a year-specific stage determination unit 158.

If a specific technology is inputted, the feature-related information acquisition unit 152 acquires feature-related information for calculating feature values of features contained in a predefined feature set by searching the bibliographic database 110.

The year-specific feature value calculation unit 154 classifies the acquired feature-related information by the year and calculates a feature value for each feature by the year using the year-specific feature-related information.

The year-specific feature set creation unit 156 creates a year-specific feature set for the specific technology using the year-specific feature values calculated by the year-specific feature value calculation unit 154.

That is, the year-specific feature set creation unit 156 creates a feature set of the specific technology for the years of 2008, 2009, 2010 and 2011.

The method of creating a year-specific feature set by the year-specific feature set creation unit 156 is similar to the method of creating a feature set by the feature set creation unit shown in FIG. 3.

The year-specific stage determination unit 158 determines a year-specific stage of the specific technology by comparing the created year-specific feature set with the answer feature set. At this point, the year-specific stage determination unit 158 calculates a similarity to the answer feature set of each stage by applying a weighting factor to each feature value contained in the year-specific feature set and determines a stage of an answer feature set having the highest similarity as a year-specific stage of the specific technology. Here, the weighting factor may be a weighting factor indicated in the answer feature set of each stage.

That is, the year-specific stage determination unit 158 calculates a similarity to the answer feature set of each stage by applying a weighting factor to each feature value contained in the year-specific feature set. Then, the year-specific stage determination unit 158 determines a stage of an answer feature set having the highest similarity as a stage where the specific technology belongs to in the technology lifecycle.

For example, if the feature set of the year 2010 of the specific technology is compared with the answer feature set and the feature set of the year 2010 of the specific technology is most similar to the third stage of the answer feature set as a result of comparison, the year-specific stage determination unit 160 determines that the feature set of the year 2010 of the specific technology belongs to the third stage in the technology lifecycle.

Through the method described above, the year-specific stage determination unit 160 determines the year-specific stage for the specific technology.

The developing speed estimation module 160 estimates a developing speed of the specific technology using the year-specific stage determined by the year-specific stage determination module 150. At this point, the developing speed estimation module 160 estimates a development stage or a developing speed of the specific technology. Here, the development stage is a stage where the next stage belongs to in the technology lifecycle, and the developing speed is a time required to move to the next stage.

The developing speed estimation module 160 estimates developing speed using, for example, an exponential moving average.

For example, year-specific stages are determined as follows: the first stage in 2005, the first stage in 2006, the second stage in 2007, the third stage in 2008, the third stage in 2009, and the third stage in 2010, and this will be described below.

Since exponential moving averages of three-year intervals are calculated as 1.33 in the period of 2005 to 2007, 2 in the period of 2006 to 2008, 2.66 in the period of 2007 to 2009 and 3 in the period of 2008 to 2010, an average value of about 3.18 will be calculated for the period of 2009 to 2011 based on the slope of the average values.

If an exponential moving average is calculated for the stage of 2011 using the exponential moving average calculated for the period of 2009 to 2011, it will be 3.54.

Therefore, the developing speed estimation module 160 may estimate a year when the technology will be in the fourth stage or the fifth stage after the third stage using the method described above.

The visualization module 170 visualizes the technology lifecycle which shows the current stage and the year-specific stage of the specific technology.

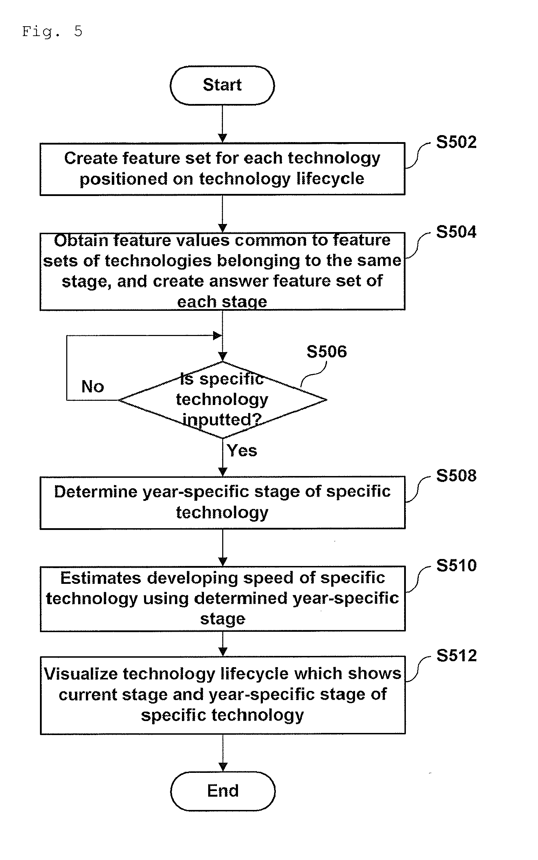

FIG. 5 is a flowchart illustrating a computer-implemented method of estimating a developing speed of a technology by a developing speed estimation apparatus according to the present invention.

Referring to FIG. 5, the developing speed estimation apparatus creates a feature set for each technology positioned on a technology lifecycle S502.

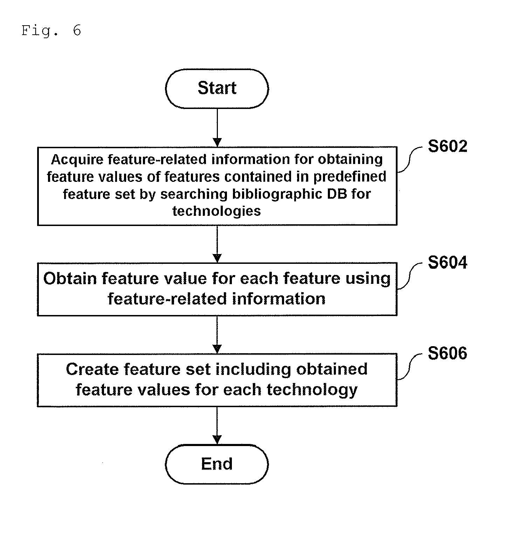

A technique of the developing speed estimation apparatus for creating a feature set for each technology will be described in detail with reference to FIG. 6.

After performing step S502, the developing speed estimation apparatus calculates common feature values of feature sets of technologies belonging to the same stage in the technology lifecycle and creates an answer feature set of each stage S504. That is, the developing speed estimation apparatus calculates common feature values for discriminating feature values of the technologies belonging to the same stage in the technology lifecycle from feature values of the other stages, and creates an answer feature set of each stage based on the common feature values.

If a specific technology is inputted S506 after performing step S504, the developing speed estimation apparatus determines a year-specific stage of the specific technology S508. That is, the developing speed estimation apparatus acquires feature-related information for predetermined features by searching the bibliographic database for the specific technology, creates a year-specific feature set using the acquired feature-related information, and determines a year-specific stage of the specific technology by comparing the year-specific feature set with the answer feature set.

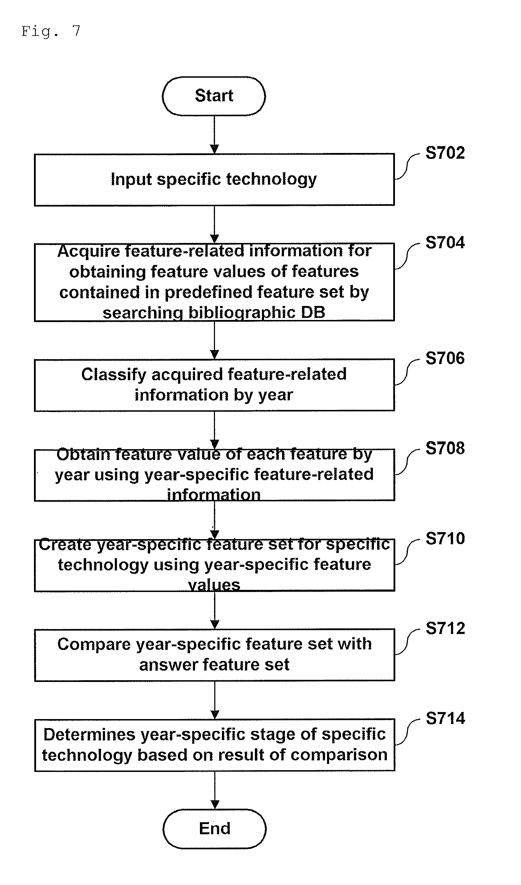

A computer-implemented method of the developing speed estimation apparatus for determining a year-specific stage of the specific technology will be described in detail with reference to FIG. 7.

After performing step S508, the developing speed estimation apparatus estimates developing speed of the specific technology using the determined year-specific stage S510. At this point, the developing speed estimation apparatus estimates a stage where the next stage of the specific technology will belong to in the technology lifecycle or a time required to move to the next stage. The developing speed estimation apparatus may estimate the developing speed using a variety of methods such as an exponential moving average, regression analysis and the like.

After performing step S510, the developing speed estimation apparatus visualizes the technology lifecycle which shows the current stage and the year-specific stage of the specific technology S512. The year-specific stage also includes the estimated next stage.

The developing speed estimation apparatus visualizes the technology lifecycle which shows the current stage and the year-specific stage of the specific technology as shown in FIG. 8.

Referring to FIG. 8, technologies are displayed in each stage of the technology lifecycle which shows the current stage and the year-specific stage of the specific technology.

The technology lifecycle described here includes five stages in total, such as a Technology Trigger stage, a Peak of Inflated Expectations stage, a Trough of Disillusionment stage, a Slope of Enlightenment stage, and a Plateau of Productivity stage.

Each stage shows technologies belonging to the stage, as well as the current stage and the year-specific stage of the specific technology.

For example, technologies of Biometric Authentication Methods, Internet Micropayment System, Interactive TV, Predictive Analytic, Electronic Paper, Location Aware Application, and Speech Recognition are shown in the Slope of Enlightenment stage, in addition to the current stage and the year-specific stage of the specific technology 'A'. That is, the technology lifecycle shows the stages of technology 'A' for the years of 2006, 2007, 2008, 2009, 2010 and 2011.

The user may easily confirm a stage where the specific technology inputted by the user belongs to using the visualized technology lifecycle.

Here, although the stages of the technology lifecycle are expressed as five stages in total, such as the Technology Trigger stage, the Peak of Inflated Expectations stage, the Trough of Disillusionment stage, the Slope of Enlightenment stage and the Plateau of Productivity stage, the stages of the technology lifecycle can be set or modified in a different form such as a first stage, a second stage, a third stage and the like.

FIG. 6 is a flowchart illustrating a method of creating a feature set for each technology by a developing speed estimation apparatus according to the present invention.

Referring to FIG. 6, the developing speed estimation apparatus acquires feature-related information for calculating feature values of features contained in a predefined feature set by searching the bibliographic database for the technologies S602.

Then, the developing speed estimation apparatus calculates a feature value for each feature by the technology using the acquired feature-related information S604 and creates a feature set containing the calculated feature values for each technology S606.

Through the method described above, a feature set of all the technologies shown on the technology lifecycle is created.

FIG. 7 is a flowchart illustrating a method of determining a year-specific stage of a specific technology by a developing speed estimation apparatus according to the present invention.

Referring to FIG. 7, if a specific technology is inputted S702, the developing speed estimation apparatus acquires feature-related information for calculating feature values of features contained in a predefined feature set by searching the bibliographic database S704.

After performing step S704, the developing speed estimation apparatus classifies the acquired feature-related information by the year S706 and calculates a feature value for each feature by the year using the year-specific feature-related information S708.

Then, the developing speed estimation apparatus creates a year-specific feature set for the specific technology using the year-specific feature values S710. That is, the developing speed estimation apparatus creates a feature set of the specific technology for the years of 2008, 2009, 2010 and 2011, respectively.

After performing step S710, the developing speed estimation apparatus compares the created year-specific feature set with the answer feature set S712 and determines a stage of an answer feature set having the highest similarity as a year-specific stage of the specific technology S714.

The developing speed estimation apparatus calculates a similarity to the answer feature set of each stage by applying a weighting factor to each feature value contained in the year-specific feature set, and determines a stage of an answer feature set having the highest similarity as a year-specific stage of the specific technology. At this point, the weighting factor may be a weighting factor indicated in the answer feature set of each stage.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. An apparatus for estimating a developing speed of a technology, the apparatus including a storage and a processor and comprising:
a bibliographic database for integrating heterogeneous resources;
a feature set creation module for calculating feature values of predefined features by searching the bibliographic database, and creating a feature set of each technology using the calculated feature values, for technologies positioned on a technology lifecycle;
an answer feature set creation module for calculating common feature values of feature sets of technologies belonging to the same stage in the technology lifecycle and creating an answer feature set of each stage;
a year-specific stage determination module for, if a specific technology is inputted, acquiring feature-related information for predetermined features by searching the bibliographic database for the specific technology, creating a year-specific feature set using the acquired feature-related information, and determining a year-specific stage of the specific technology by comparing the year-specific feature set with the answer feature set; and
a developing speed estimation module for estimating the developing speed of the specific technology using the determined year-specific stage, wherein
the year-specific stage determination module includes:
a feature-related information acquisition unit for, if the specific technology is inputted, acquiring feature-related information for calculating feature values of features contained in a predefined feature set by searching the bibliographic database;
a year-specific feature value calculation unit for classifying the acquired feature-related information by the year and calculating a feature value for each feature by the year using the year-specific feature-related information;
a year-specific feature set creation unit for creating a year-specific feature set for the specific technology using the year-specific feature values; and
a year-specific stage determination unit for determining a year-specific stage of the specific technology by comparing the created year-specific feature set with the answer feature set.

2. The apparatus according to claim 1, further comprising:
a visualization module for visualizing the technology lifecycle which shows a current stage, the year-specific stage and an estimated stage of the specific technology.

3. The apparatus according to claim 1, wherein the bibliographic database integrates at least one of resources such as papers, patents, reports, academic data, newspapers, and standards, and each of the resources can be categorized by the year.

4. The apparatus according to claim 1, wherein the predefined feature includes at least one of the number of respective resources, ratios among the resources, the number of fields where a corresponding technology is found in each resource, the number of lower technology names, the number of researchers, a technical field classification table, the number of journals, the number of proceedings, a name of an author, a name of a journal, an absolute growth rate of papers or patents for each resource, a growth rate with respect to the compound annual growth rate of each resource, an increase rate in the field of paper subjects, an increase rate of journals containing papers, and a ratio of patent registration to patent application.

5. The apparatus according to claim 1, wherein the feature set creation module includes:
a feature-related information acquisition unit for acquiring feature-related information for calculating feature values of features contained in a predefined feature set by searching the bibliographic database for the technologies;
a feature value calculation unit for calculating a feature value for each feature using the acquired feature-related information; and
a feature set creation unit for creating a feature set containing the calculated feature values for each technology.

6. The apparatus according to claim 1, wherein the answer feature set creation module calculates a common feature value for discriminating feature values of technologies belonging to the same stage in the technology lifecycle from feature values of the other stages, and creates an answer feature set of each stage based on the common feature value.

7. The apparatus according to claim 6, wherein the common feature value is at least one of an average, a range defined by minimum and maximum values, a standard deviation, and comparison between years.

8. The apparatus according to claim 1, wherein the year-specific stage determination unit determines a stage of an answer feature set having a common feature value closest to a feature value of the year-specific feature set among common feature values of the answer feature set of each stage as a year-specific stage of the specific technology.

9. The apparatus according to claim 1, wherein the developing speed estimation module estimates a stage where the next stage of the specific technology will belong to in the technology lifecycle or a time required to move to the next stage.

10. A computer-implemented method of estimating a developing speed of a technology by a developing speed estimation apparatus, the method comprising the steps of:
(a) creating a feature set for each technology positioned on a technology lifecycle;
(b) calculating common feature values of feature sets of technologies belonging to the same stage in the technology lifecycle and creating an answer feature set of each stage;
(c) if a specific technology is inputted, acquiring feature-related information for predetermined features by searching the bibliographic database for a specific technology, creating a year-specific feature set using the acquired feature-related information, and determining a year-specific stage of the specific technology by comparing the year-specific feature set with the answer feature set; and
(d) estimating the developing speed of the specific technology using the determined year-specific stage, wherein step (c) includes the steps of:
if the specific technology is inputted, acquiring feature-related information for calculating feature values of features contained in a predefined feature set by searching the bibliographic database;
classifying the acquired feature-related information by the year and calculating a feature value for each feature by the year using the year-specific feature-related information;
creating a year-specific feature set for the specific technology using the year-specific feature values; and
determining a year-specific stage of the specific technology by comparing the created year-specific feature set with the answer feature set.

11. The method according to claim 10, further comprising the step of:
visualizing the technology lifecycle which shows a current stage, the year-specific stage and an estimated stage of the specific technology.

12. The method according to claim 10, wherein step (a) includes the steps of:
acquiring feature-related information for calculating feature values of features contained in a predefined feature set by searching the bibliographic database for the technologies;
calculating a feature value for each feature by technology using the acquired feature-related information; and
creating a feature set containing the calculated feature values for each technology.

13. The method according to claim 10, wherein step (b) calculates a common feature value for discriminating feature values of technologies belonging to the same stage in the technology lifecycle from feature values of the other stages, and creates an answer feature set of each stage based on the common feature value.

14. The method according to claim 13, wherein the step of determining a year-specific stage of the specific technology determines a stage of an answer feature set having a common feature value closest to a feature value of the year-specific feature set among common feature values of the answer feature set of each stage as a year-specific stage of the specific technology.

15. The method according to claim 10, wherein step (d) estimates a stage where the next stage of the specific technology will belong to in the technology lifecycle or a time required to move to the next stage.
